**Europäisches Patentamt**

**European Patent Office**

**Office européen des brevets**

(11) Publication number: **0 139 880**
**B1**

# (12) EUROPEAN PATENT SPECIFICATION

(45) Date of publication of patent specification: **14.10.87**

(21) Application number: **84108591.3**

(22) Date of filing: **20.07.84**

(51) Int. Cl.⁴: **B 01 D 13/00, C 02 F 1/18**

(54) Distillation device.

(30) Priority: **10.08.83 US 521677**

(43) Date of publication of application:
**08.05.85 Bulletin 85/19**

(45) Publication of the grant of the patent:
**14.10.87 Bulletin 87/42**

(84) Designated Contracting States:
**AT BE CH DE FR GB IT LI LU NL SE**

(56) References cited:
**EP-A-0 039 197**
**EP-A-0 040 411**
**US-A-2 445 350**

(73) Proprietor: **W.L. GORE & ASSOCIATES, INC.**
**555 Paper Mill Road P.O. Box 9329**
**Newark Delaware 19711 (US)**

(72) Inventor: **Gore, David Walton**
**1041 Ardrey Circle**
**Flagstaff Arizona 86001 (US)**

(74) Representative: **Taylor, Derek George et al**
**MATHISEN, MACARA & CO. The Coach House**
**6-8 Swakeleys Road**
**Ickenham Uxbridge UB10 8BZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a distillation device and in particular to a device for distillation of sea-water for survival purposes.

It is known from U.S. Patent Specification 2,445,350 (Ginnings) to provide a multiple effect solar still for location, for example, on a life raft but above sea level. The still includes a wick to which a supply of sea water can be transferred, a water and vapour-proof film overlying the wick, a water vapour transmitting film beneath and in contact with the wick, and a non-wetting spacer such as a large mesh screen beneath the vapour-transmitting film. Beneath the spacer is a condenser cloth layer and beneath the cloth is a water and vapour-proof film in thermal contact with a second evaporator wick of a second still.

It is also known, for example from U.S. Patent Specification 3,340,186 (Weyl) to provide a device for the distillation of aqueous liquid containing salt or other low volatility component comprising a microporous membrane permeable by water vapour but impermeable by water, a first liquid and vapour impermeable sheet spaced from one side of said microporous membrane to form therebetween a first chamber for said aqueous liquid, a liquid and vapour impermeable, heat conductive sheet disposed on the opposite side of the microporous membrane to form therebetween a distillate chamber from which distillate can be drawn off.

An object of the present invention is to provide a distillation device of simple and relatively inexpensive construction and which, in at least one form, is capable of distilling sea-water for survival purposes.

This is achieved, in accordance with the invention, in that the first chamber contains a wicking material capable of drawing an aqueous liquid and capable of being heated by heat passing through said first impermeable sheet which overlies the wicking material, through which aqueous solution can be passed on occasion to flush aqueous solution containing a high concentration of low volatility component out of said wicking material, wherein the thickness of the membrane is greater than 13 μm, and wherein the heat conductive sheet in use is in contact with the surface of the sea or other mass of cooling water.

In a preferred form, the distillation device is capable of floating in the surface of said aqueous liquid with said first impermeable sheet lying on top of the wicking material and exposed to solar radiation, and the microporous membrane underlying the wicking material and selectively bonded thereto at its periphery, said liquid and vapour impermeable, heat conductive sheet being bonded to said membrane at its periphery. Conveniently, the microporous membrane is expanded P.T.F.E. and the wicking material is black.

A further liquid and vapour impermeable sheet can be disposed above the first said impermeable sheet such that an air gap can be created between the first and further impermeable sheets. This will assist buoyancy of the device. Alternatively, other means for assisting buoyancy can be provided.

Means for flushing high concentration salt solution out of the wicking material can comprise means for increasing the exposure of the wicking material to contact with the sea-water in which the device is floating.

The invention will now be particularly described by way of example with reference to the accompanying drawings in which:—

Figure 1 is a cross-sectional view of an embodiment of the device of this invention, along the longitudinal axis of the device, and

Figure 2 is a cross-sectional view of another embodiment of the device of this invention.

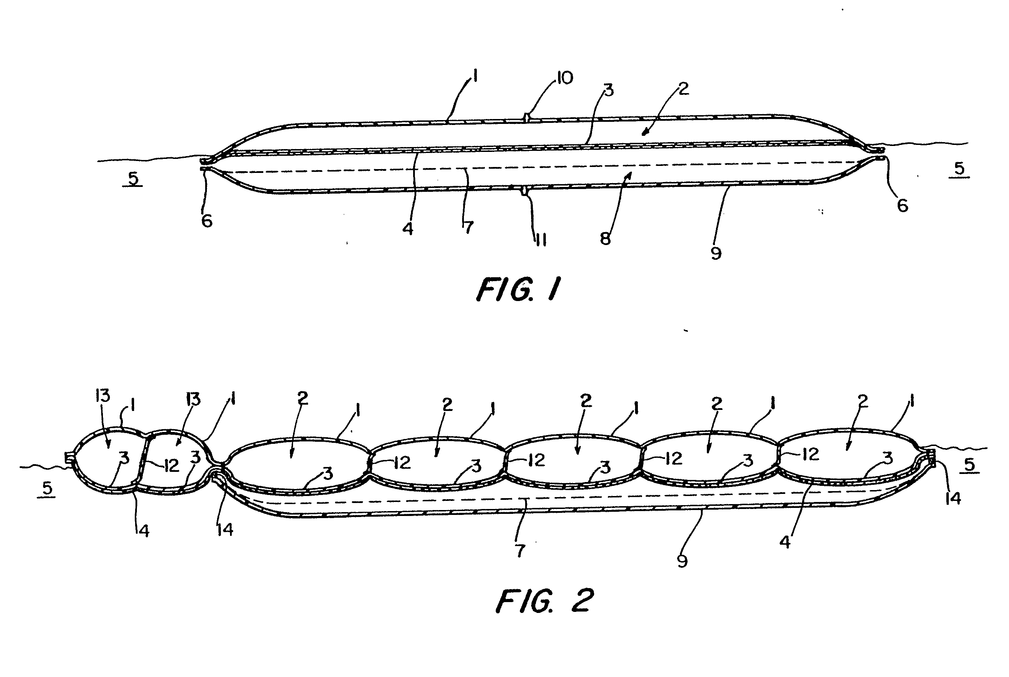

The device of Figure 1, which is designed to float on the surface of sea-water, comprises a first transparent impermeable plastics sheet 1, a second impermeable sheet 3 (which can be transparent or black) which lies below the first sheet 1 and is bonded to it around the periphery to form an air chamber 2, a wick 4 formed of black wicking cloth, and capable of drawing sea-water, located beneath the second sheet 3, a microporous membrane 7 underlying the wicking cloth 4 and a liquid and vapour impermeable but heat-conducting plastics sheet 9 underlying the microporous membrane and seamed thereto to form a distillate chamber 8 therebetween.

Before discussing the construction of the device in further detail, it is advantageous to consider the manner of its operation.

Solar radiation passes downward through the transparent impermeable plastic sheet 1, across the air gap in air chamber 2, into the second impermeable sheet 3. Radiation which passes through the sheet 3 is absorbed into the wicking cloth 4, which preferably is black.

Sea-water 5 wicks into the wicking cloth 4 at the exposed edge 6 thereof and is heated by the solar radiation. Water vapour from this warm wet cloth 4 diffuses downward through the microporous membrane 7 and condenses in the distillate chamber 8 by contact with the cool plastics sheet 9 or with distillate already formed in chamber 8. The plastics sheet 9 (referred to as the "condenser") is cooled by the sea-water 5 on which the device floats. The microporous membrane 7 serves to separate the sea-water from the distillate, since it is impermeable to liquid water.

This device may be stored rolled up or folded. When needed, it is opened and the air chamber 2 is inflated through a valve 10 with sufficient air to provide for flotation and to keep sheets 1 and 3 separated. After a period of time distillate may be drawn off from the chamber 8 by opening valve 11 located at the bottom of the still.

The evaporation of sea-water from the black wicking cloth 4 results in an increasing salinity in the water remaining in the wick 4. This increased salinity reduces the tendency for sea-water in the wick 4 to evaporate and causes a progressive decline in the productivity of the device. This decline may be remedied by allowing fresh sea-water to flow between the wick 4 and the membrane 7 every few hours while the still is operating. This flow of fresh sea-water flushes out the high-salinity water from the wick and restores the original productivity. For the purposes of washing the wick 4, it is necessary to provide an area along the edge 6 which can be opened to separate the wick 4 from the membrane 7. By a dripping motion, sea-water 5 is induced to enter this opening and flush out the concentrated sea-water.

Although one section of the edge 6 of the still must allow separation of the wick 4 from the membrane 7, most of the periphery of the device must be well fastened to prevent undue amounts of sea-water 5 from washing into the still between the wick 4 and the membrane 7. Continual washing of cool sea-water 5 into this area of the device prevents warming of the wick 4 and results in decreased productivity.

It is best to laminate the wick 4 to the impermeable plastic sheet 3 in order to prevent condensation of vapour on the sheet 3 in the region of any air gap that may develop between the wick 4 and the sheet 3. Such condensation scatters incoming solar radiation and prevents its absorption into the wick 4. Another possible consequence of not laminating the wick 4 to the sheet 3 is that the wick may partially sink, inducing sea-water 5 to enter from the edge 6 and flow over it, thus cooling the wick 4 and decreasing productivity.

The air gap in air chamber 2 serves to insulate the wick 4 from the cooling winds, and so increases productivity when the ambient air temperature is low, since the wick 4 is at best only a few degrees warmer than the sea-water 5. However, there may be situations where this insulation is not necessary. In fact, if the sea-water 5 is cool and the ambient air temperature is high, the device will produce more distillate without the insulating air gap 2. Hence the transparent sheet 1 is optional. If it is not used, air bladders may be provided around the periphery of the device to hold it up and prevent sea-water from washing over the sheet 3 and cooling the wick 4.

As shown in Figure 2, separation of sheets 1 and 3 can be restricted by the provision of baffles 12 bonded therebetween in spaced apart relationship.

The device can be maintained afloat, by providing one or more flotation portions 13 at the bow and/or elsewhere, each comprising a sealed air chamber defined between upper and lower impermeable sheets 1 and 3, the sheets being interconnected if desired by a baffle 12.

The nature of the membrane 7 is important to the proper functioning of this invention. It must be permeable to vapour yet impermeable to liquid water.

Resistance to the entry of water into the pore spaces of the membrane should be ideally several pounds per square inch. The membrane should be highly porous to facilitate diffusion of water vapour and to impede conductive heat transfer through the membrane. The membrane should have a moisture vapour transmission rate of above about 1000 gms/m$^2$/24hrs. as measured on ASTM E96—66B. The membrane must not permit the flow of water into the pore volume during operation and preferably the water entry pressure should be above 1 psig (6.9kPa), as measured on Mullins Burst Test Apparatus to prevent accidental wetting. Porosities of up to ninety percent, are readily achievable in membranes which resist water entry at pressures of up to thirty pounds per square inch (207kPa).

The thickness of the membrane 7 is critical to the device of this invention. Since the heat flux is fixed by the variable radiation, a very thin membrane will permit only a very small drop in temperature across it. The device does not begin to produce water until the temperature difference across the membrane exceeds a certain minimum value which depends on the salinity of the feedwater in the wick. If the membrane is too thin it will not be able to permit even a minimal temperature difference, and it will not produce distillate.

The minimal membrane thickness necessary depends on the feedwater salinity and the amount of heat flux through the membrane. Moreover, even if a thin membrane produces distillate from the sea-water, the net driving force of vapour pressure difference will be small and the productivity will be low. A very large percentage of the heat flux will be by heat conduction rather than by evaporation and condensation of water. For the device to operate on sea-water the membrane should be more than about 13 microns thick. The upper limit on thickness is a matter of balancing economic factors. Suitable thicknesses can range from 13 microns up to 300 μm. It has been found that a membrane of about 200 μm offers a good compromise between productivity and cost of the still.

EXAMPLE 1

Two small stills A and B were constructed using the geometry shown cross-sectionally from the side in Figure 2. Impermeable plastics sheets 1 and 3 were made of .004 inch (.01 cm) thick clear vinyl film. Sheet 3 and 4.5 ounce black cotton wicking cloth 4 were laminated together. The vinyl sheets 1 and 3 were heat sealed together along the rectangular perimeter. In this design, baffles 12 were heat sealed between vinyl sheets 1 and 3 such that air could pass around them to fill all spaces between sheets 1 and 3. An isolated air space 13 was created to form a bow. The air in bow 13 was under greater pressure than that in other air spaces 2 in order to enhance the ability of the device to ride over waves.

An expanded polytetrafluroethylene membrane 7 was heat sealed along the periphery to a .004 inch (.01 cm) thick vinyl sheet 9. These in turn were fastened along the periphery to the upper sandwich assembly by means of Velcro (regd. trade mark) fasteners 14.

The membrane sections of these stills were 57 cm long and 37 cm wide. The two stills were floated on 3.45% NaCl solution at a temperature of 24 degrees centigrade and subjected to 563 watts/m² radiation from incandescent lamps for a period of four hours.

Still A incorporated an expanded PTFE membrane 13 microns thick with a density of about .1 gms/cc. This still produced 18 milliliters of distillate.

Still B incorporated an expanded PTFE membrane 51 µm thick with a density of about 0.3 gms/cc. This still produced 50 milliliters of distillate.

## Claims

1. A device for the distillation of aqueous liquid containing salt or other low volatility component comprising a microporous membrane permeable by water vapour but impermeable by water, a first liquid and vapour impermeable sheet spaced from one side of said microporous membrane to form therebetween a first chamber for said aqueous liquid, a liquid and vapour impermeable, heat conductive sheet disposed on the opposite side of the microporous membrane to form therebetween a distillate chamber from which distillate can be drawn off, characterised in that the first chamber contains a wicking material (4), capable of drawing an aqueous liquid and capable of being heated by heat passing through said first impermeable sheet (3) which overlies the wicking material, through which aqueous solution can be passed on occasion to flush aqueous solution containing a high concentration of low volatility component out of said wicking material, wherein the thickness of the membrane (7) is greater than 13 µm, and wherein the heat conductive sheet in use is in contact with the surface of the sea or other mass of cooling water.

2. A device according to claim 1 characterised in that it is capable of floating in the surface of said aqueous liquid with said first impermeable sheet (3) exposed to solar radiation, and the microporous membrane (7) underlying the wicking material (4) and selectively bonded thereto at its periphery, said liquid and vapour impermeable, heat conductive sheet (9) being bonded to said membrane (7) at its periphery.

3. A device according to claim 1 or claim 2 characterised in that the microporous membrane (7) is expanded polytetrafluoroethylene.

4. A device according to any preceding claim characterised by a further liquid and vapour impermeable sheet (1) above the first said impermeable sheet (3) such that an air gap (2) can be created between the said first and further impermeable sheets (1, 3).

5. A device according to any preceding claim characterised in that the heat source for distillation is provided by the temperature difference between ambient air and aqueous liquid fed to the device.

6. A device according to any preceding claim characterised in that the first liquid and vapour impermeable sheet (3) overlying said wicking material is black.

7. A device according to any preceding claim characterised in that the wicking material (4) is black.

8. A device according to any preceding claim characterised in that the membrane (7) has a thickness in the range of 25—300 µm.

## Patentansprüche

1. Vorrichtung zur Destillation einer wässerigen Flüssigkeit, die Salz oder einen anderen schwer verflüchtigbaren Bestandteil enthält, mit einer mikroporösen, für Wasserdampf durchlässigen, jedoch für Wasser undurchlässigen Membran, einer ersten flüssigkeits- und dampfundurchlässigen Schicht in Abstand von einer Seite der mikroporösen Membran, um dazwischen eine erste Kammer für die wässerige Flüssigkeit zu bilden, einer flüssigkeits- und dampfundurchlässigen, wärmeleitenden Schicht, die and der gegenüberliegenden Seite der mikroporösen Membran angeordnet ist, um dazwischen eine Destillatkammer zu bilden, von der Destillat abgezogen werden kann, dadurch gekennzeichnet, daß die erste Kammer ein Dochtmaterial (4) enthält, das imstande ist, eine wässerige Flüssigkeit fortzuziehen, und das geeignet ist, durch Wärme erwärmt zu werden, die die erste undurchlässige Schicht (3) durchquert, die über dem Dochtmaterial liegt, durch das eine wässerige Lösung wenn nötig geleitet werden kann, um eine wässerige Lösung, die eine hohe Konzentration eines schwer verflüchtigbaren Bestandteiles enthält, aus dem Dochtmaterial zu spülen, wobei die Dicke der Membran (7) größer als 13 µm ist, und wobei die wärmeleitende Schicht bei der Verwendung in Kontakt mit der Meeresoberfläche oder einer anderen Kühlwassermasse ist.

2. Vorrichtung nach Anspruch 1, dadurch gekennzeichnet, daß sie an der Oberfläche der wässerigen Flüssigkeit schwimmen kann, wobei die erste undurchlässige Schicht (3) der Sonnenstrahlung ausgesetzt ist und die mikroporöse Membran (7) unter dem Dochtmaterial (4) vorliegt und selektiv an dieses am Umfang gebunden ist, wobei die flüssigkeits- und dampfundurchlässige, wärmeleitende Schicht (9) an die Membran (7) an ihrem Umfang gebunden ist.

3. Vorrichtung nach Anspruch 1 oder 2, dadurch gekennzeichnet, daß die mikroporöse Membran (7) geschäumtes Polytetrafluoräthlyen ist.

4. Vorrichtung nach einem der vorhergehenden Ansprüche, gekennzeichnet durch eine weitere flüssigkeits- und dampfundurchlässige Schicht (1) oberhalb der ersten undurchlässigen Schicht (3), so daß ein Luftspalt (2) zwischen der ersten und der weiteren undurchlässigen Schicht (1 bzw. 3) geschaffen werden kann.

5. Vorrichtung nach einem der vorhergehenden Ansprüche, dadurch gekennzeichnet, daß die Wärmequelle für die Destillation durch den Temperaturunterschied zwischen der Umgebungsluft und der der Vorrichtung zugeführten wässerigen Flüssigkeit vorgesehen ist.

6. Vorrichtung nach einem der vorhergehenden Ansprüche, dadurch gekennzeichnet, daß die erste flüssigkeits- und dampfundurchlässige Schicht (3), die sich über dem Dochtmaterial befindet, schwarz ist.

7. Vorrichtung nach einem der vorhergehenden Ansprüche, dadurch gekennzeichnet, daß das Dochtmaterial (4) schwarz ist.

8. Vorrichtung nach einem der vorhergehenden Ansprüche, dadurch gekennzeichnet, daß die Membran (7) eine Dicke im Bereich von 25—300 µm hat.

**Revendications**

1. Dispositif pour la distillation de liquide aqueux contenant du sel ou d'autres composants de faible volatilité, comprenant une membrane microporeuse perméable à la vapeur d'eau mais imperméable à l'eau, une première feuille imperméable aux liquides et à la vapeur espacée d'un côté· de la membrane microporeuse pour former ainsi une première chambre pour le liquide aqueux précité, une feuille thermiquement conductrice, imperméable aux liquides et à la vapeur agencée du côté opposé de la membrane microporeuse pour former ainsi une chambre de distillat d'où le distillat peut être extrait, caractérisé en ce que la première chambre contient une matière absorbante (4), pouvant aspirer un liquide aqueux et être chauffée par la chaleur traversant la première feuille imperméable (3) qui recouvre la matière absorbante, qu'une solution aqueuse peut traverser occasionnellement pour expulser une solution aqueuse contenant une concentration élevée en composant faiblement volatil de la matière absorbante, l'épaisseur de la membrane (7) étant supérieure à 13 µm et la feuille thermiquement conductrice en cours d'utilisation étant en contact avec la surface de la mer ou de toute autre masse d'eau de refroidissement.

2. Dispositif suivant la revendication 1, caractérisé en ce qu'il peut flotter à la surface du liquide aqueux précité avec la première feuille imperméable (3) exposée au rayonnement solaire, et la membrane microporeuse (7) agencée en dessous de la matière absorbante (4) et sélectivement liée à celle-ci suivant sa périphérie, la feuille thermiquent conductrice, imperméable aux liquides et à la vapeur (9) étant liée à la membrane (7) suivant sa périphérie.

3. Dispositif suivant l'une ou l'autre des revendications 1 et 2, caractérisé en ce que la membrane microporeuse (7) est du polytétrafluoroéthylène expansé.

4. Dispositif suivant l'une quelconque des revendications précédentes, caractérisé en ce qu'il comporte une autre feuille imperméable aux liquides et à la vapeur (1) située au-dessus de la première feuille imperméable (3) précitée de telle sorte qu'un intervalle d'air (2) puisse être créé entre la première et cette autre feuille imperméable (1, 3).

5. Dispositif suivant l'une quelconque des revendications précédentes, caractérisé en ce que la source de chaleur pour la distillation est fournie par la différence de température entre l'air ambiant et le liquide aqueux amené au dispositif.

6. Dispositif suivant l'une quelconque des revendications précédentes, caractérisé en ce que la première feuille imperméable aux liquides et à la vapeur (3) recouvrant la matière absorbante précitée est noire.

7. Dispositif suivant l'une quelconque des revendications précédentes, caractérisé en ce que la matière absorbante (4) est noire.

8. Dispositif suivant l'une quelconque des revendications précédentes, caractérisé en ce que la membrane (7) a une épaisseur de l'ordre de 25—300 µm.

FIG. 1

FIG. 2